Europäisches Patentamt

European Patent Office

Office européen des brevets

(11) Publication number: **0 050 963**
**B1**

# EUROPEAN PATENT SPECIFICATION

(45) Date of publication of patent specification: **10.04.85**

(21) Application number: **81304960.8**

(22) Date of filing: **22.10.81**

(51) Int. Cl.⁴: **H 02 M 3/335**

(54) Ringing converter.

(30) Priority: **23.10.80 JP 148761/80**

(43) Date of publication of application:
**05.05.82 Bulletin 82/18**

(45) Publication of the grant of the patent:
**10.04.85 Bulletin 85/15**

(84) Designated Contracting States:
**CH DE FR GB LI**

(56) References cited:
**US-A-4 166 213**

(73) Proprietor: **FANUC LTD**
**3580, Shibokusa Aza-Komanba**
**Oshino-mura, Minamitsuru-gun Yamanashi**
**Prefecture (JP)**

(72) Inventor: **Hattori, Masayuki**
**1271-41, Narahara-cho**
**Hachioji-shi Tokyo (JP)**
Inventor: **Nakamura, Shigeo**
**5540, Hino**
**Hino-shi Tokyo (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

### Description

This invention relates to a DC-to-DC converter, particularly of the type referred to as a ringing converter.

A ringing converter is possessed of a simple circuit construction and has its input and output sides DC-separated by means of a transformer. For this reason a ringing converter is often used as a low-power DC-to-DC converter in an apparatus of the type in which the circuitry internally of the apparatus is to be DC-separated from the power supply side. A ringing converter of such type may comprise a blocking oscillator consisting of a single transistor and a transformer having primary, secondary and positive feedback windings, and a rectifier circuit for rectifying the AC voltage developed by the secondary winding of the transformer. In operation, a direct current applied to the blocking oscillator is converted into a prescribed AC voltage thereby, the AC voltage then being rectified by the rectifier circuit in order to obtain a DC voltage of a prescribed voltage value. A disadvantage encountered in the conventional ringing converters is that the DC voltage output fluctuates widely when there is a change in the load current on the output side, or when there is a fluctuation in the DC voltage input. The conventional ringing converters therefore have been unfit for application to power supplies connected to electronic circuits that demand relatively stable power supply voltages.

According to the present invention there is provided a ringing converter connectable to receive a power source voltage and to supply a load with load current and load voltage, the converter comprising:

a transformer having first and second primary windings and a secondary winding; and

switching means having a gate and being operably connected between said first and second primary windings, to provide a blocking oscillator, for use in applying said power source voltage to said first and second primary windings;

the ringing converter being characterised by:

detecting means operably connected to said switching means and to said second primary winding, for detecting the current in the primary windings and for providing a control signal responsive to said current in the primary windings; and

stabilizing means including a differential amplifier means being operably connected to the gate of said switching means, to said second primary winding and to said detecting means, said stabilizing means being operable to compensate for resistance in the secondary winding, and to amplify said control signal, and to control said switching means in accordance with the amplified control signal such that said load current and load voltages are stabilized via said switching means in accordance with said control signal.

In a development the secondary winding of the transformer has the same number of turns as a primary winding which applies an input signal to a switching transistor of the blocking oscillator.

A preferred embodiment of the present invention provides a ringing converter having a stable output voltage. The output voltage will exhibit little fluctuation even when the voltage on the input side fluctuates, and even when there is a change in the load current on the output side.

A preferred embodiment makes it possible to compensate for a voltage drop caused by the resistance of the secondary winding.

These and other features and advantages of a ringing converter according to the present invention will be apparent from the following description taken in connection with the accompanying drawings, in which like reference characters designate the same or similar parts throughout the figures thereof.

Figs. 1 and 2 are circuit diagrams each showing a conventional ringing converter;

Fig. 3 is a waveform diagram showing the base potential of a transistor for producing oscillation,

Fig. 4 is a circuit diagram showing an embodiment by way of example of a ringing converter according to the present invention; and

Fig. 5 is a waveform diagram showing the conduction time of a transistor $Q_1$ included in the circuit of Fig. 4, as well as the shape of a voltage $V_4$.

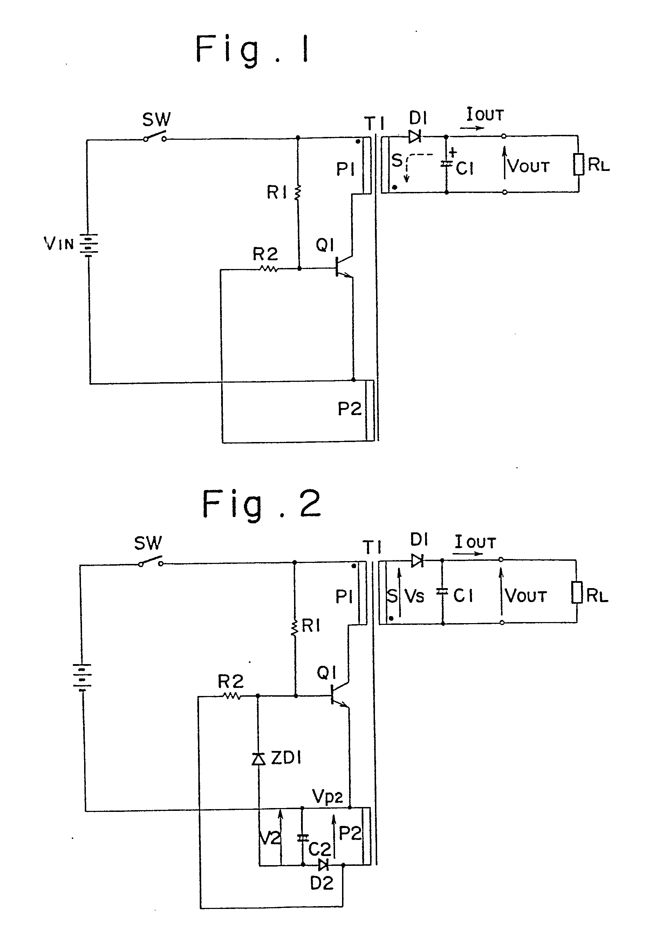

A preferred embodiment of the present invention will now be described, referring first to Figs. 1 through 3 for a discussion of the shortcomings, encountered in a conventional ringing converter, that the present invention seeks to overcome or alleviate at least to some extent.

A ringing converter of the type to which the present invention is applied in the present example has the general circuit configuration shown in Fig. 1. Here a blocking oscillator is constructed by a transformer $T_1$ and a transistor $Q_1$. When the switch SW is closed, a minute current flows into the base of transistor $Q_1$ through a resistor $R_1$, rendering the transistor $Q_1$ slightly conductive so that a minute voltage is impressed upon the primary winding $P_1$ of transformer $T_1$. As a result, a voltage is induced in the second primary winding $P_2$ of the transformer, causing an increase in the base current of the transistor $Q_1$ via the resistor $R_2$, so that the transistor conducts to a greater degree. Since the arrangement is for positive feedback, transistor $Q_1$ attains the fully conductive state instantaneously. The current flowing in the primary winding $P_1$, namely the collector current of the transistor $Q_1$, increases with time from the moment of conduction, but an upper limit is imposed upon the collector current owing to a limitation upon the current amplification factor of transistor $Q_1$. This gives rise to an increase in the collector potential with time, which in turn diminishes the base current, thereby further elevating the collector potential. Again, owing to the effects of positive feedback, the transistor $Q_1$ is rendered completely non-conductive instantaneously. When transistor $Q_1$ is cut off in this manner, a voltage is developed owing to the magnetic energy which has been stored in the primary winding $P_1$ up to the moment of cut off. This voltage charges a capacitor $C_1$ through a secondary winding S and a diode $D_1$, giving rise to an output voltage $V_{out}$. At the same time, the base of transistor $Q_1$ is negatively biased so that the transistor is held in the non-conductive state. When the magnetic energy drops off to zero, the voltages developed by the primary winding $P_2$ and secondary winding S attempt to fall off to a value of zero. At this time, however, a current flows in the direction of the broken arrow for a period equivalent to the recovery time of the diode $D_1$, the current returning to zero abruptly upon lapse of the recovery time. When this occurs a very small kick voltage is generated by the primary winding $P_2$, so that a current flows into the base of transistor $Q_1$ through resistor $R_2$, along with a current from resistor $R_1$, thereby again rendering transistor $Q_1$ conductive. The result is oscillation sustained in the manner described. With the conventional arrangement of this type, any fluctuation in the load current $I_{out}$ or in the input voltage $V_{in}$ will give rise to a large fluctuation in the output voltage $V_{out}$.

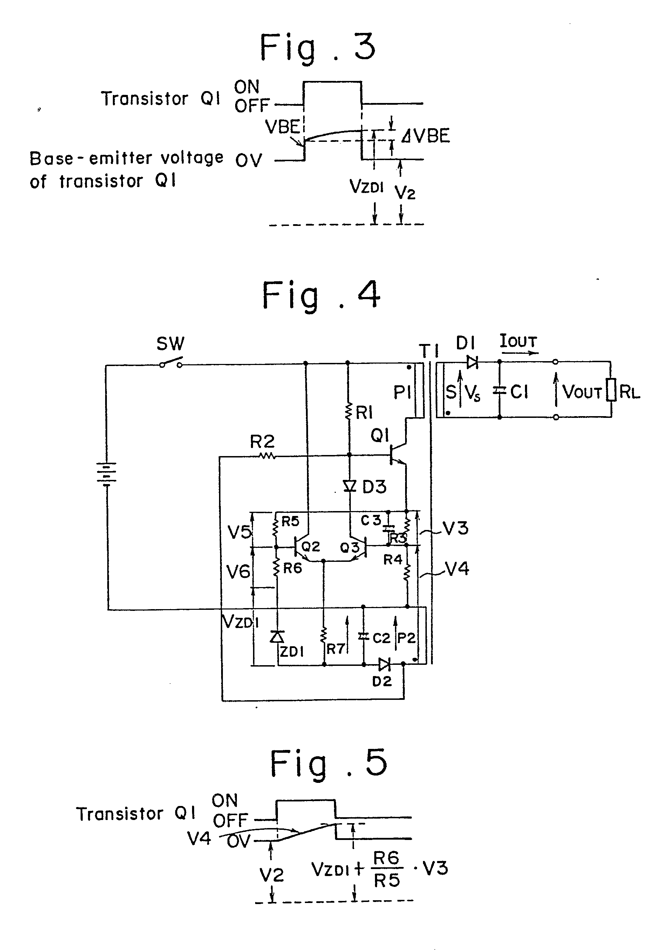

The arrangement of Fig. 2 represents an improvement over the ringing converter arrangement of Fig. 1. The conducting action of transistor $Q_1$ is the same as in the circuit of Fig. 1 as far as conduction start-up and the continuation of oscillation are concerned. However, a difference is observed in connection with a Zener diode $ZD_1$ and a voltage developed by a capacitor $C_2$ when the transistor $Q_1$ is rendered non-conductive. Specifically, as far as the relationship between the Zener diode $ZD_1$, voltage $V_2$ and the operation of transistor $Q_1$ is concerned, it is obvious in terms of direct currents that transistor $Q_1$ operates in such a manner that the voltage $V_2$ does not become larger than the Zener voltage $V_{ZD_1}$. Transistor $Q_1$ operates in the same manner even in one period of oscillation. When transistor $Q_1$ conducts, the collector current increases with time but, owing to the emitter resistance, a voltage ascribable to the collector current appears and is applied to the base potential. This voltage $V_{BE}$, as shown in Fig. 3, is limited by the Zener voltage $V_{ZD_1}$ and voltage $V_2$, so that the transistor $Q_1$ tends to be shifted toward the cut-off state owing to the insufficient base current. Thus, the voltage $V_{BE}$ decides the transistor conduction time. In accordance with circuit operation, voltage $V_2$ grows in size as the conduction time increases. Since the circuit operates with negative feedback, however, the conduction time decreases as the voltage $V_2$ increases. Accordingly, although voltage $V_2$ fluctuates by the minute change $\Delta V_{BE}$ in the base-emitter voltage $V_{BE}$, stabilization is achieved in theory. Furthermore, if it is assumed that primary winding $P_2$ and secondary winding S have the same number of turns, their respective outputs $V_2$, $V_{out}$ will also be the same if the diodes $D_1$, $D_2$ drop equivalent voltages. Thus, if $V_2$ is stabilized, the same will be true for $V_{out}$. Never-

theless, the current flowing in primary winding $P_2$ is very small, with the current flowing in secondary winding S being larger in magnitude and fluctuating constantly owing to the fluctuation in load. This means that the voltage drop due to the resistance of the secondary winding is not of a negligible magnitude, the result being an error in the output voltage.

A ringing converter which is in accordance with the present invention, and which is constructed to eliminate or reduce the foregoing shortcomings, will now be described with reference to Figs. 4 and 5.

It will be appreciated from Fig. 4 that a differential amplifier composed of transistors $Q_2$, $Q_3$ and of a resistor $R_7$ is added to the ringing converter having the output voltage stabilizing circuit of Fig. 2. Though the oscillation and stabilization principles are the same as described in connection with Fig. 2, the present arrangement is constructed based on the fact that the current flowing in the primary winding $P_1$ is approximately proportional to the current $I_{out}$ flowing through the secondary winding S. Specifically, the arrangement is such that the change in the output voltage $V_{out}$ attributed to the change in load, as well as the winding resistance of the secondary winding S, are compensated for on the primary side, thereby to suppress fluctuation of the output voltage $V_{out}$. To be more specific, the mean value of the emitter current of transistor $Q_1$ can be detected as the voltage $V_3$ by means of the resistor $R_3$ and capacitor $C_3$ which are connected to the emitter, but this value expresses also the mean value of the current of primary winding $P_1$ when the base current is neglected. In the above-mentioned differential amplifier composed of transistors $Q_2$, $Q_3$ and of resistor $R_7$, transistor $Q_3$ conducts when its base potential exceeds that of transistor $Q_2$, thereby drawing a base current from transistor $Q_1$ which is therefore cut off. Resistor $R_4$, corresponding to the emitter resistance of transistor $Q_1$ in the circuit of Fig. 2, detects the emitter current (which is approximately equivalent to the current flowing through primary winding $P_1$) which increases with time once transistor $Q_1$ starts conducting, the voltage $V_4$ developed by resistor $R_4$ being applied to the input terminal (the base of transistor $Q_3$) of the differential amplifier. If the bases of transistors $Q_2$, $Q_3$ are at the same potential when transistor $Q_1$ makes the transistion from the conductive to the non-conductive state, the voltage $V_2$ can be expressed as follows:

$$V_2 = V_{ZD_1} + V_6 + V_5 - V_3 - V_4 = V_{ZD_1} + V_6 - V_4 \qquad (1)$$

so that

$$V_5 = V_3$$

Ignoring the base current of transistor $Q_2$ gives:

$$V_6 = \frac{R_6}{R_5} V_5 = \frac{R_6}{R_5} V_3 \qquad (2)$$

Substituting for the above in Eq. (1) gives;

$$V_2 = V_{ZD_1} + \frac{R_6}{R_5} V_3 - V_4 \qquad (3)$$

The relationship between the voltage $V_2$ and the transistor conduction time is as shown in Fig. 5.

Since the voltage $V_4$ can be set to a negligibly small value, and since the voltage $V_3$ is proportional to the output current $I_{out}$, $V_2$ can be written as follows:

$$V_2 = V_{ZD_1} + \frac{R_6}{R_5} \cdot k \cdot I_{out} \qquad (4)$$

where $k$ is the proportion factor.

Letting primary winding $P_2$ and secondary winding S have the same number of turns, and letting diodes $D_2$, $D_1$ develop equivalent voltage drops, and further, letting $r$ represent the internal resistance of the secondary winding S, the output voltage $V_{out}$ may be expressed as follows:

$$V_{out} = V_2 + V_{D_2} - r \cdot I_{out} - V_{D_1} = V_2 - r \cdot I_{out} \qquad (5)$$

Substituting for Eq. 4 in Eq. 5 gives:

$$V_{out} = V_{ZD_1} + \frac{R_6}{R_5} k \cdot I_{out} - r \cdot I_{out}$$

$$= V_{ZD_1} + (\frac{R_6}{R_5} \cdot k - r) \, I_{out} \qquad (6)$$

By suitably selecting the various constants so as to establish the relation

$$\frac{R_6}{R_5} \cdot k = r,$$

the relation $V_{out} = V_{ZD_1}$ can be established. This shows that the output voltage will be constant regardless of any fluctuation in the load current.

It will be evident from the foregoing detailed description that the present embodiment of the invention is based on the fact that the load current of the secondary side of the transformer is proportional to the current on the primary side of the transformer in a ringing converter having an output voltage stabilizing circuit, and that the embodiment is therefore so constructed as to detect, on the primary side, the load current which prevails on the secondary side to thereby compensate for a variation in the output voltage caused by a fluctuation in the load current, said compensation being effected also on the primary side. Thus it is possible to obtain a stabilized, constant output voltage deposite fluctuations in load and in supply voltage, the results being superior to those seen in the prior art.

## Claims

1. A ringing converter connectable to receive a power source voltage and to supply a load (RL) with load current ($I_{out}$) and load voltage ($V_{out}$), the converter comprising:

a transformer (T1) having first and second primary windings (P1, P2) and a secondary winding (S); and

switching means (Q1) having a gate and being operably connected between said first and second primary windings (P1, P2), to provide a blocking oscillator, for use in applying said power source voltage to said first and second primary windings (P1, P2);

the ringing converter being characterised by:

detecting means (R4) operably connected to said switching means (Q1) and to said second primary winding (P2), for detecting the current in the primary windings (P1, P2) and for providing a control signal (V4) responsive to said current in the primary windings (P1, P2); and

stabilizing means including a differential amplifier means (Q2, Q3, R7) being operably connected to the gate of said switching means (Q1), to said second primary winding (P2) and to said detecting means (R4), said stabilizing means being operable to compensate for resistance in the secondary winding (S) and to amplify said control signal (V4), and to control said switching means (Q1) in accordance with the amplified control signal such that said load current ($I_{out}$) and load voltage ($V_{out}$) are stabilized via said switching means (Q1) in accordance with said control signal (V4).

2. A ringing converter according to claim 1, characterised in that the transformer secondary winding (S) has the same number of turns as a transformer primary winding (P2) which applies an input signal to said switching means (Q1) of the blocking oscillator.

## Patentansprüche

1. Sperrwandler, der verbindbar ist, um eine Stromquelenspannung aufzunehmen umd um eine Last (RL) mit einem Lastrom ($I_{out}$) und einer Lastspannung ($V_{out}$) zu versorgen, mit

einem Transformator (T1), der eine erste und eine zweite Primârwicklung (P1, P2) sowie eine Sekundärwicklung (S) hat, und

einem Schaltmittel (Q1), das eine Steuerelektrode hat und wirksam zwischen die erste und die zweite Primärwicklung geschaltet ist, um einen Sperrwandler zum Zwecke des Anlegens der Stromquellenspannung an die erste und die zweite Primärwicklung (P1, P2) zu bilden, gekennzeichnet durch

ein Erfassungsmittel (R4), das wirksam mit dem Schaltmittel (Q1) und mit der zweiten Primärwicklung (P2) zum Erfassen des Stroms in den Primärwicklungen (P1, P2) und zum Abgeben eines Steuersignals (V4), das abhängig von dem Strom in den Primärwicklungen (P1, P2) ist, verbunden ist, und

eine Stabilisierungsschaltung, die einen Differentialverstärker (Q2, Q3, R7) enthält, der wirksam mit der Steuerelektrode des Schaltmittels (Q1), der zweiten Primärwicklung (P2) und dem Erfassungsmittel (R4) verbunden ist, wobei die Stabilisierungsschaltung wirksam ist, um den Widerstand in der Sekundärwicklung (S) zu kompensieren und um das Steuersignal (V4) zu verstärken sowie um das Schaltmittel (Q1) in Übereinstimmung mit dem verstärkten Steuersignal derart zu steuern, daß der Laststrom ($I_{out}$) und die Lastspannung $V_{out}$) über das Schaltmittel (Q1) in Übereinstimmung mit dem Steuersignal (V4) stabilisiert werden.

2. Sperrwandler nach Anspruch 1, dadurch gekennzeichnet, daß die Sekundärwicklung (S) des Transformators die gleiche Anzahl von Windungen wie die Primärwicklung (P2) des Transformators hat, die ein Eingangssignal an das Schaltmittel (Q1) des Sperrwandlers legt.

**Revendications**

1. Convertisseur à oscillateur bloqué pouvant être branché de manière à recevoir une tension électrique et à fournir à une charge (RL) un courant de charge ($I_{out}$) et une tension de charge ($V_{out}$), le convertisseur comprenant:

Un transformateur (T1) présentant un premier et un deuxième enroulement primaire (P1, P2) et un enroulement secondaires (S); et

des moyens de commutations (Q1) munis d'une porte et branchés fonctionnellement entre les premier et deuxième enroulements primaires (P1, P2) pour constituer un oscillateur de blocage devant servir à appliquer la tension électrique aux premier et deuxième roulements primaires (P1, P2);

le convertisseur à oscillateur bloqué étant caractérisé par:

des moyens de détection (R4) reliés fonctionnellement aux moyens de commutation (Q1) et au deuxième enroulement primaire (P2), pour détecter le courant dans les enroulements primaires (P1, P2) et pour fournir un signal de commande (V4) en réponse au courant dans les enroulements primaires (P1, P2); et

des moyens de stabilisation comprenant un moyen amplificateur différentiel (Q2, Q3, R7) relié fonctionnellement à la porte des moyens de commutation (Q1), au deuxième enroulement primaire (P2) et aux moyens de détection (R4), ces moyens de stabilisation étant capables de compenser la résistance dans l'enroulement secondaire (S) et d'amplifier le signal de commande (V4) et de commander les moyens de commutation (Q1) conformément au signal de commande amplifié de telle sorte que le courant de charge ($I_{out}$) et la tension de charge ($V_{out}$) sont stabilisés par l'intermédiare des moyens de commutation (Q1) conformément au signal de commande (V4).

2. Convertisseur à oscillateur bloqué selon la revendication 1, caractérisé en ce que l'enroulement secondaire (S) du transformateur a le même nombre de spires que l'enroulement primaire (P2) du transformateur qui applique un signal d'entrée aux moyens de commutation (Q1) de l'oscillateur de blocage.

# Fig. I

# Fig. 2

# Fig . 3

Transistor Q1 ON
OFF

Base-emitter voltage OV
of transistor Q1

VBE

$\Delta$VBE

VZD1  V2

# Fig . 4

SW    T1    D1    IOUT

P1    S  Vs    =C1    VOUT  RL

R1

Q1

R2

D3

V5    R5    C3    R3    V3

Q2    Q3

R4    V4

V6    R6

VZD1

ZD1    R7    C2  P2

D2

# Fig .5

Transistor Q1 ON
OFF

V4    OV

V2    $V_{ZD1} + \dfrac{R6}{R5} \cdot V3$